# EUROPÄISCHE PATENTANMELDUNG

(11) **EP 1 008 661 A2**
(43) Veröffentlichungstag der Anmeldung: **14.06.2000**
(21) Anmeldenummer: 99124595.2
(22) Anmeldetag: 10.12.1999
(51) Int. Cl.: C21D 9/56, C21D 9/52, C23G 3/02

(54) **Vorrichtung zum Herstellen eines kontinuierlich in einer Hauptförderrichtung geförderten Metallbandes**

(30) Priorität: 12.12.1998 DE 19857412
(71) Anmelder: Sundwig GmbH, 58675 Hemer (DE)
(72) Erfinder: Dicke, Michael, 58640 Iserloh (DE); MacKenzie, Ian, 58706 Menden (DE)
(74) Vertreter: Simons, Johannes

(57) **Zusammenfassung**

Die Erfindung betrifft eine Vorrichtung zum Herstellen eines Metallbandes (B), insbesondere eines Edelstahlbandes, mit nacheinander von dem Metallband (B) in einer Hauptförderrichtung (H) durchlaufenen Einrichtungen (2,3,4,5,6,7) zum Behandeln des Metallbandes (B), wie einem Glühofen (2), einer Kühleinrichtung (3,4) und / oder einer Beizeinrichtung (6,7). Durch eine derartige Vorrichtung wird bei vermindertem Raumbedarf eine optimale Behandlung eines Metallbandes ermöglicht. Dies wird erfindungsgemäß dadurch erreicht, daß das Metallband (B) beim Durchlauf mindestens einer der Einrichtungen (2,3,4,5,6,7) den überwiegenden Teil der in der jeweiligen Einrichtung (2,3,4,5,6,7) zurückgelegten Behandlungsstrecke in einer von der Hauptförderrichtung (H) abweichenden Behandlungsrichtung (B1,B2,B3,B4) zurücklegt.

## Beschreibung

Die Erfindung betrifft eine Vorrichtung zum Herstellen eines kontinuierlich in einer Hauptförderrichtung geförderten Metallbandes, insbesondere eines Edelstahlbandes, mit nacheinander von dem Metallband durchlaufenen Einrichtungen zum Behandeln des Metallbandes, wie einem Glühofen, einer Kühleinrichtung und / oder einer Beizeinrichtung. Eine Vorrichtung dieser Art ist beispielsweise aus der EP 0 706 840 A2 bekannt.

Bei bekannten Vorrichtungen der voranstehend genannten Art durchläuft das Metallband in der Regel zunächst eine Glühbehandlung, um beispielsweise das Gefüge zu verbessern und durch das vorhergehende Walzen in das Band induzierte Spannungen zu beseitigen. Anschließend wird das Band üblicherweise abgekühlt und durchläuft eine Beizeinrichtung, in welcher der nach dem Glühen auf der Bandoberfläche haftende Zunder entfernt und die Oberfläche des Bandes für die Weiterverarbeitung vorbereitet wird. Dabei kann die Beizbehandlung elektrolytisch oder chemisch erfolgen. Häufig werden auch Kombinationen dieser Beizverfahren eingesetzt.

Die einzelnen Einrichtungen der bekannten Vorrichtungen sind derart hintereinander angeordnet, daß das Band eine horizontal ausgerichtete, linear verlaufende Förderstrecke durchläuft. Zusätzlich sind häufig Speichereinrichtungen vorgesehen, welche als Puffer dienen, wenn die Gefahr besteht, daß das Band in einer der Einrichtungen nicht mit derselben Geschwindigkeit verarbeitet werden kann wie in den vorangehend durchlaufenen Bearbeitungsstationen.

Der Vorteil der linear aufeinander folgenden Anordnung der einzelnen Einrichtungen der bekannten Vorrichtung besteht darin, daß das Band, ohne umgelenkt zu werden, in einer horizontal ausgerichteten Linie, der sogenannten "Pass-Line", durch die Vorrichtung gefördert werden kann. Hinzu kommt, daß bei einer konstant verlaufenden Förderrichtung insbesondere im Bereich der Kühlstrecke und der Beizeinrichtung die einzelnen Bearbeitungsschritte mit verhältnismäßig geringem apparativen Aufwand durchgeführt werden können. So ist es beispielsweise problemlos möglich, die Kühlung des Bandes durch entsprechend angeordnete Düsenbalken auf einem Rollengang durchzuführen. Ebenso kann die Beizbehandlung in entsprechend ausgestatteten Becken im Durchlauf erfolgen.

Ein Nachteil bekannter Vorrichtungen der eingangs genannten Art besteht jedoch in deren beträchtlicher Baulänge. Dieser für die bekannten Vorrichtungen erforderliche Raumbedarf ist insbesondere dann nachteilig, wenn bestehende Hallen genutzt werden sollen, um eine solche Vorrichtung zu installieren.

Die Aufgabe der Erfindung besteht darin, eine Vorrichtung zu schaffen, welche bei vermindertem Raumbedarf eine optimale Behandlung eines Metallbandes ermöglicht.

Diese Aufgabe wird ausgehend von einer Vorrichtung der eingangs angegebenen Art dadurch gelöst, daß das Metallband beim Durchlauf mindestens einer der Einrichtungen den überwiegenden Teil der in der jeweiligen Einrichtung zurückgelegten Behandlungsstrecke in einer von der Hauptförderrichtung abweichenden Behandlungsrichtung zurücklegt.

Gemäß der Erfindung verläßt das Band beim Durchlauf mindestens einer der Einrichtungen der Vorrichtung die Hauptförderrichtung und wird in einer von der Hautpförderrichtung sich unterscheidenden Behandlungsrichtung durch die jeweilige Behandlungseinrichtung geleitet. Mit Hauptförderrichtung ist in diesem Zusammenhang die Richtung gemeint, in der das Band bewegt werden würde, um auf direktem Wege vom Eingang der Vorrichtung zu deren Ausgang zu gelangen.

Die Abweichung von der eigentlichen Hautpförderrichtung ermöglicht es, das Band in Ebenen zu führen, die beispielsweise ober- oder unterhalb der Ebene angeordnet sind, in welcher die Hauptförderrichtung liegt. Genauso ist es möglich, das Band in Ebenen zu führen, die beispielsweise rechtwinklig zur Ebene der Hautpförderrichtung angeordnet sind.

Unabhängig davon, wie das Band in von der Hauptförderrichtung abweichender Behandlungsrichtung geführt wird, kann durch die erfindungsgemäße Ausbildung einer Vorrichtung der eingangs genannten Art eine deutliche Verkürzung der Baulänge gegenüber bekannten Vorrichtungen erreicht werden. Dies führt nicht nur zu erheblichen Kosteneinsparungen beim Neubau einer jeweils erforderlichen Halle, sondern ermöglicht es darüber hinaus, bestehende Hallen begrenzter Baulänge für eine Vorrichtung zur Herstellung von Metallband zu nutzen.

Eine in der Praxis besonders vorteilhafte Ausgestaltung der Erfindung ist dadurch gekennzeichnet, daß die Hauptförderrichtung horizontal verläuft, während die jeweilige Behandlungsrichtung einen vertikalen Verlauf aufweist. Bei einer derart ausgestalteten, erfindungsgemäßen Vorrichtung wird das Band in rechtem Winkel aus der Hauptförderrichtung gelenkt und durchläuft die jeweilige Behandlungseinrichtung zum überwiegenden Teil in vertikaler Richtung. Selbstverständlich ist es ebenso möglich, das Band in eine der Hauptförderrichtung entgegengesetzte Behandlungsrichtung umzulenken, wobei die Bearbeitungsstrecke der betreffenden Bearbeitungseinrichtung in einer unter oder oberhalb der Ebene der Hauptförderrichtung angeordneten Ebene positioniert ist.

Eine weitere vorteilhafte Ausgestaltung der Erfindung ist dadurch gekennzeichnet, daß eine erfindungsgemäße Vorrichtung mindestens zwei Kühleinrichtungen umfaßt und daß das Band eine der Kühleinrichtungen in einer horizontalen Behandlungsrichtung und die andere in einer vertikalen Behandlungsrichtung durchläuft. Durch eine solche Anordnung läßt sich der für die Umlenkung des ggf. noch eine hohe Temperatur aufweisenden Bandes erforderliche Aufwand minimieren. So kann das Band in der ersten Kühleinrichtung auf eine Temperatur gekühlt werden, die es ermöglicht, eine relativ kostengünstige Umlenkeinrichtung einzusetzen, um das Band aus der Hauptförderichtung in die zweite, vertikal durchlaufene Kühleinrichtung umzuleiten.

Günstig ist es auch, wenn eine erfindungsgemäße Vorrichtung eine Beizeinrichtung umfaßt, innerhalb der das Metallband über den überwiegenden Teil der Behandlungsstrecke in einer von der Hauptförderrichtung abweichenden Behandlungsrichtung geleitet ist. Durch den Einsatz einer im wesentlichen vertikal durchlaufenen Beizeinrichtung läßt sich der benötigte Bauraum beträchtlich reduzieren. Dies gilt insbesondere dann, wenn die Behandlungsstrecke in mehrere Teilstrecken unterteilt ist, zwischen denen jeweils eine Umkehr der Behandlungsrichtung stattfindet.

Eine im Hinblick auf eine optimale, schonende Bearbeitung der Bandoberfläche besonders günstige Ausgestaltung der erfindungsgemäßen Vorrichtung ist dadurch gekennzeichnet, daß die Vorrichtung eine elektrolytisch und eine chemisch arbeitende Beizeinrichtung umfaßt, welche das Metallband nacheinander durchläuft.

Zweckmäßig für die Herstellung qualitativ besonders hochwertiger Edelstahlbänder mit einer optimierten Planheit ist es, wenn eine erfindungsgemäß ausgebildete Vorrichtung eine Streck-Richt-Einrichtung umfaßt, wobei die StreckRicht-Einrichtung vorteilhafter Weise zwischen der Kühleinrichtung und der Beizeinrichtung angeordnet ist. Ein solcher Streckrichter bewirkt nicht nur eine Verbesserung der Planheit des Metallbandes, sondern verformt zudem den auf der Bandoberfläche haftenden Zunder, so daß die anschließend durchlaufene Beize eine erhöhte Wirksamkeit entfalten kann. Günstig ist es in diesem Zusammenhang auch, wenn die Streck-Richt-Einrichtung eine Kühleinrichtung umfaßt. Auf diese Weise kann die Streck-Richt-Einrichtung selbst dazu genutzt werden, das Metallband auf die für die Beizbehandlung benötigte Temperatur abzukühlen. So kann die Länge der Kühlstrecke zusätzlich reduziert werden mit der Folge, daß nicht nur der apparative Aufwand für die Kühlung vermindert, sondern auch die Gesamtlänge der Vorrichtung verkürzt ist.

Die erfindungsgemäß ausgebildete Vorrichtung ist insbesondere zur Herstellung eines Edelstahlbandes geeignet, an dessen Oberflächenbeschaffenheit und Planheit höchste Anforderungen gestellt werden.

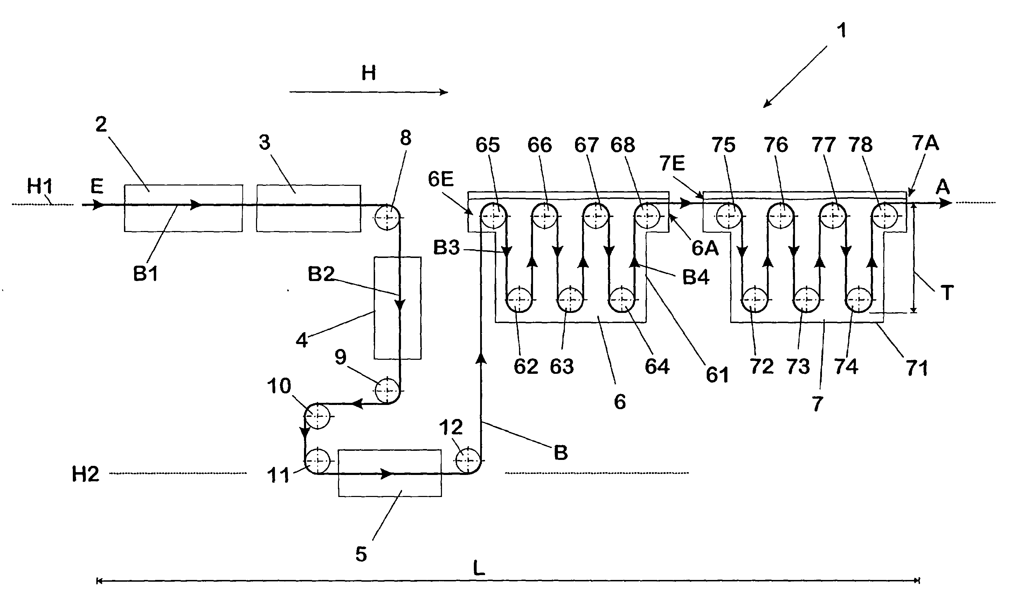

Nachfolgend wird die Erfindung anhand einer ein Ausführungsbeispiel darstellenden Zeichnung näher erläutert. Die einzige Figur zeigt eine Vorrichtung 1 zum Herstellen eines Edelstahlbandes B von Super-IIIc- oder Pseudo-IIIdQualität.

Die Vorrichtung 1 umfaßt als Behandlungseinrichtungen einen Durchlauf-Glühofen 2, eine erste Kühleinrichtung 3, eine zweite Kühleinrichtung 4, eine Streck-Richt-Einrichtung 5, eine erste Beizeinrichtung 6 und eine zweite Beizeinrichtung 7. Diese Behandlungseinrichtungen 2,3,4,5,6,7 werden ausgehend vom Eingangsbereich E der Vorrichtung 1 nacheinander von dem Edelstahlband B bis zum Ausgangsbereich A der Vorrichtung 1 durchlaufen. Dabei sind der Eingangs- E und der Ausgangsbereich A der Vorrichtung im wesentlichen fluchtend ausgerichtet, so daß die Hauptförderrichtung H, in welcher sich das Edelstahlband B auf direktem Wege vom Eingangs- E zum Ausgangsbereich A bewegen würde, im wesentlichen ebenfalls horizontal ausgerichtet ist.

Der zuerst vom Edelstahlband B durchlaufene DurchlaufGlühofen 2 ist herkömmlich aufgebaut. Seine Behandlungsstrecke ist horizontal ausgerichtet, so daß die Behandlungsrichtung B1 beim Durchlauf des DurchlaufGlühofens 2 der horizontal ausgerichteten Hauptförderrichtung H entspricht.

An den Durchlauf-Glühofen 2 schließt sich die ebenfalls in horizontaler Ausrichtung durchlaufene erste Kühleinrichtung 3 an. In dieser wird das Edelstahlband B mittels Luft gekühlt, welche über nicht dargestellte Düsenbalken auf die Oberfläche des Edelstahlbandes B ausgebracht wird.

Nach Verlassen der ersten Kühleinrichtung 3 wird das Edelstahlband B über eine mit einer temperaturbeständigen Beschichtung versehene Rolle 8 aus der Hauptförderrichtung H in eine vertikale Behandlungsrichtung B2 umgelenkt. In dieser durchläuft das Edelstahlband B die zweite, vertikal ausgerichtete Kühleinrichtung 4, in welcher das Edelstahlband B ebenfalls mittels Luft abgekühlt wird.

Über weitere Führungsrollen 9,10,11 wird das Edelstahlband B dann zunächst in eine der Hauptförderrichtung H entgegengesetzte, anschließend in eine vertikale und schließlich wieder zurück in die horizontal ausgerichtete Hauptförderrichtung H geleitet, in der es die ebenfalls horizontal ausgerichtete Streck-Richt-Einrichtung 5 durchläuft. Dabei ist die Streck-Richt-Einrichtung 5 in einer Horizontalebene H2 angeordnet, welche mit Abstand unterhalb der Horizontalebene H1 positioniert ist, in welcher der Eingangs- E und Ausgangsbereich A der Vorrichtung 1 angeordnet sind. Die Streck-Richt-Einrichtung 5 arbeitet im Naßbetrieb, wobei der eingesetzte KühlfluidVolumenstrom so bemessen ist, daß das Edelstahlband 8 nach Durchlauf der Streck-Richt-Einrichtung 5 auf die für den Eintritt in die Beizeinrichtung 6 optimale Schlußtemperatur abgekühlt ist. Gleichzeitig wird durch die Streck-Richt-Einrichtung 5 die Planheit des Edelstahlbandes B verbessert und der auf dem Band B haftende Zunder gebrochen, so daß die Wirksamkeit der nachfolgend durchlaufenen Beizeinrichtungen 6,7 verbessert ist.

Durch eine Führungsrolle 12 wird das Edelstahlband B anschließend in vertikaler Richtung zum Eingang 6E der ersten Beizeinrichtung 6 geleitet, der in der Horizontalebene H1 angeordnet ist, in welcher auch der Eingangs- E und der Ausgangsbereich A der Vorrichtung 1 liegen. Schließlich gelangt das Edelstahlband B vom fluchtend zum Eingang 6E der Beizeinrichtung 6 ausgerichteten Ausgang 6A zum ebenfalls fluchtend zu diesem angeordneten Eingang 7E der zweiten Beizeinrichtung 7. Das fertig behandelte Edelstahlband B verläßt die Vorrichtung 1 in Hauptförderrichtung H über den Ausgangsbereich A der Vorrichtung 1, zu welchem fluchtend der Ausgang 7A der zweiten Beizeinrichtung 7 angeordnet ist.

Die erste Beizeinrichtung 6 arbeitet elektrolytisch, während in der zweiten Beizeinrichtung 7 eine chemische Bearbeitung der Oberfläche des Edelstahlbandes B erfolgt. Jede der Beizeinrichtungen 6,7 weist ein mit Behandlungsflüssigkeit versorgtes Becken 61,71 auf, in dessen Bodenbereich jeweils Umlenkrollen 62,63,64;72,73,74 angeordnet sind. Ebensolche Umlenkrollen 65,66,67,68;75,76,77,78 sind jeweils im oberen Bereich der Becken 61,71 angeordnet, wobei sich die Drehachsen der oberen Umlenkrollen 65,66,67,68;75,76,77,78 im Bereich der Horizontalebene H1 befinden. Das die Beizeinrichtungen 6,7 durchlaufende Edelstahlband B wird mittels der Führungsrollen 62-68;72-78 wechselnd in vertikal ausgerichtete, gegenläufige Behandlungsrichtungen B3, B4 umgelenkt. Auf diese Weise ist die gesamte beim Durchlauf der Beizeinrichtungen 6,7 zurückgelegte Bearbeitungsstrecke in mehrere vertikal ausgerichtete Teilstrecken T unterteilt, deren Endpunkte jeweils durch eine obere 65-68;75-78 und eine untere Führungsrolle 62-64;72-74 bestimmt sind. Auf diese Weise ist die Baulänge der Beizeinrichtungen 6,7 gegenüber herkömmlichen Einrichtungen dieser Art deutlich verkürzt.

Aufgrund der vertikalen Anordnung der zweiten Kühleinrichtung 4, der dadurch ermöglichten Anordnung der Streck-Richt-Einrichtung 5 in einer Horizontalebene H2 unterhalb der Horizontalebene H1 von Ein- E und Ausgangsbereich A der Vorrichtung 1 sowie der erläuterten Aufteilung der Behandlungsstrecke der Beizeinrichtungen 6,7 in eine Mehrzahl von vertikal ausgerichteten, nacheinander gegenläufig durchlaufenen Teilstrecken T ist die Baulänge L der Vorrichtung 1 gegenüber bekannten Vorrichtungen dieser Art insgesamt verkürzt. Diese kurze Bauweise macht die erfindungsgernäße Vorrichtung 1 insbesondere zum Einbau in bestehende Hallen begrenzter Länge geeignet.

### Bezugszeichenliste

- 1: Vorrichtung zum Herstellen eines Edelstahlbandes von Super-IIIc- oder Pseudo-IIId-Qualität
- 2: Durchlauf-Glühofen
- 3: erste Kühleinrichtung
- 4: zweite Kühleinrichtung
- 5: Streck-Richt-Einrichtung
- 6: erste Beizeinrichtung
- 6A: Ausgang der ersten Beizeinrichtung 6
- 6E: Eingang der ersten Beizeinrichtung 6
- 61,71: Becken
- 62-68: Umlenkrollen
- 7: zweite Beizeinrichtung
- 7A: Ausgang der zweiten Beizeinrichtung 7
- 7E: Eingang der zweiten Beizeinrichtung 7
- 72-78: Umlenkrollen
- 8: Rolle
- 9,10,11,12: Führungsrollen
- A: Ausgangsbereich der Vorrichtung 1
- B: Edelstahlband
- B1: horizontale Behandlungsrichtung beim Durchlauf des Durchlauf-Glühofens 2
- B2, B3, B4: vertikale Behandlungsrichtungen
- E: Eingangsbereich der Vorrichtung 1
- H: Hauptförderrichtung
- H2: untere Horizontalebene
- H1: obere Horizontalebene
- L: Baulänge
- T: Teilstrecken

## Patentansprüche

1. Vorrichtung zum Herstellen eines Metallbandes (B), insbesondere eines Edelstahlbandes, mit nacheinander von dem Metallband (B) in einer Hauptförderrichtung (H) durchlaufenen Einrichtungen (2,3,4,5,6,7) zum Behandeln des Metallbandes (B), wie einem Glühofen (2), einer Kühleinrichtung (3,4) und / oder einer Beizeinrichtung (6,7), **dadurch gekennzeichnet**, **daß** das Metallband (B) beim Durchlauf mindestens einer der Einrichtungen (2,3,4,5,6,7) den überwiegenden Teil der in der jeweiligen Einrichtung (2,3,4,5,6,7) zurückgelegten Behandlungsstrecke in einer von der Hauptförderrichtung (H) abweichenden Behandlungsrichtung (B1,B2,B3,B4) zurücklegt.

2. Vorrichtung nach Anspruch 1, **dadurch gekennzeichnet**, **daß** die Hauptförderrichtung (H) horizontal verläuft, während die jeweilige Behandlungsrichtung (B1,B2,B3,B4) einen vertikalen Verlauf aufweist.

3. Vorrichtung nach einem der voranstehenden Ansprüche, **dadurch gekennzeichnet, daß** sie mindestens zwei Kühleinrichtungen (3,4) umfaßt und **daß** das Metallband (B) eine der Kühleinrichtungen (3) in einer horizontalen Behandlungsrichtung (B1) und die andere in einer vertikalen Behandlungsrichtung (B2) durchläuft.

4. Vorrichtung nach einem der voranstehenden Ansprüche, **dadurch gekennzeichnet**, **daß** sie eine Beizeinrichtung (6,7) umfaßt, innerhalb der das Metallband (B) über den überwiegenden Teil der Behandlungsstrecke in einer von der Hauptförderrichtung (H) abweichenden Behandlungsrichtung (B3,B4) geleitet ist.

5. Vorrichtung nach Anspruch 4, **dadurch gekennzeichnet, daß** die Behandlungsstrecke in mehrere Teilstrecken (T) unterteilt ist, zwischen denen jeweils eine Umkehr der Behandlungsrichtung (B3,B4) stattfindet.

6. Vorrichtung nach einem der voranstehenden Ansprüche, **dadurch gekennzeichnet, daß** sie eine elektrolytisch (6) und eine chemisch arbeitende Beizeinrichtung (7) umfaßt, welche das Metallband (B) nacheinander durchläuft.

7. Vorrichtung nach einem der voranstehenden Ansprüche, **dadurch gekennzeichnet, daß** sie eine Streck-Richt-Einrichtung (5) umfaßt.

8. Vorrichtung nach Anspruch 7, **dadurch gekennzeichnet, daß** die Streck-Richt-Einrichtung (5) zwischen der Kühleinrichtung (3,4) und der Beizeinrichtung (6,7) angeordnet ist.

9. Vorrichtung nach Anspruch 7 oder 8, **dadurch gekennzeichnet, daß** die Streck-Richt-Einrichtung (5) eine Kühleinrichtung umfaßt.
